# EUROPEAN PATENT SPECIFICATION

(11) **EP 3 439 335 B1**
(45) Date of publication and mention of the grant of the patent: **13.11.2019**
(21) Application number: 16896918.6
(22) Date of filing: 31.03.2016
(51) Int. Cl.: H04W 4/70, H04W 16/26, H04W 56/00, H04W 88/04, H04W 92/18

(54) **WIRELESS COMMUNICATION SYSTEM, WIRELESS DEVICE, RELAY NODE, AND BASE STATION**
DRAHTLOSKOMMUNIKATIONSSYSTEM, DRAHTLOSE VORRICHTUNG, RELAISKNOTEN UND BASISSTATION
SYSTÈME DE COMMUNICATION SANS FIL, DISPOSITIF SANS FIL, NOEUD RELAIS, ET STATION DE BASE

(43) Date of publication of application: 06.02.2019
(73) Proprietor: Fujitsu Limited, Kawasaki-shi, Kanagawa 211-8588 (JP)
(72) Inventor: CHEN, Hongyang, Kawasaki-shi Kanagawa 211-8588 (JP); SHIMOMURA, Tsuyoshi, Kawasaki-shi Kanagawa 211-8588 (JP); TANAKA, Yoshinori, Kawasaki-shi Kanagawa 211-8588 (JP)
(74) Representative: Haseltine Lake Kempner LLP
(86) International application number: PCT/JP2016/060750
(87) International publication number: WO 2017/168701

(56) References cited:
- EP-A1- 2 903 392
- WO-A2-2015/180890
- JP-A- 2014 527 763
- US-A1- 2014 204 835
- LG ELECTRONICS INC: "Further Consideration on Timing Alignment", 3GPP DRAFT; R1-100229 FURTHER CONSIDERATION ON TIMING ALIGNMENT_LGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050417919, [retrieved on 2010-01-12]
- "A discussion and text proposal for reduced transmit power in MTC networks", 3GPP TSG-RAN WG1#68 R1-120800, 6 February 2012 (2012-02-06), XP050563143,

## Description

### FIELD

A technology that is described in the present specification relates to a wireless communication system, a wireless equipment, a relay node, and a base station.

### BACKGROUND

With the Internet of Things (IoT), various "things" each can be equipped with a communication function. The various "things", each of which is equipped with the communication function, make a connection to the Internet, a wireless access network, or the like, and thus can perform communication or can perform communication with each other.

In some cases, the communication by the "things" is referred to as "device-to-device (D2D) communication", "machine type communications (MTC) ", or the like. For this reason, in some cases, the "thing" that is equipped with the communication function is referred to as a D2D device, an MTC device, or the like.

### SUMMARY

### Technical Problem

When many MTC devices individually make connections to a base station and perform data transmissions, the processing capacity of the base station is insufficient, or the efficiency of utilization of a radio resource is reduced. For this reason, in some cases, a relay node that relays data transmissions among a plurality of MTC devices to the base station is positioned in a wireless communication system.

PTL3 discloses a wireless communications system including a base station, a relay device, and a terminal device. The terminal device is operable to receive from the base station an allocation of uplink resources for transmitting uplink data to the relay device, and to transmit uplink data to the relay device using the uplink resources allocated to the terminal device. The relay device is operable to receive the transmitted uplink data from the terminal device on the allocated resources, to receive an allocation of uplink data resources for relaying the received uplink data to the base station, and to transmit the received uplink data to the base station using the uplink resources allocated to the relay device.

In this case, the MTC device performs transmission to the destination relay node, without performing direct communication to the destination base station. In other words, the MTC device performs direct uplink (UL) communication to the destination base station in a limited manner.

For this reason, the base station, for example, has difficulty in acquiring information relating to timing advance (TA) for adjusting a timing for transmission from the MTC device to the relay node, directly from the MTC device.

Consequently, in some cases, the base station has difficult in suitably controlling a timing for transmission by each of the MTC devices that make a connection to the relay node. When the timing for the transmission by an individual MTC device is not suitably controlled, interference occurs among signals that are transmitted by the MTC devices, and thus the probability of the relay node failing in reception of a signal from the MTC device increases. This problem is discussed in NPL2.

An object of an aspect of a technology that is disclosed in the present specification is such that a timing for transmission to a relay node by a wireless equipment that performs UL communication to a base station in a limited manner can be suitably controlled.

### Solution to Problem

The present invention is defined in independent claims 1, 6 and 7. Optional embodiments are defined in the dependent claims.

### Advantageous Effects of Invention

According to an aspect of a technology, a timing for transmission to a relay node by a wireless equipment that performs uplink communication to a base station in a limited manner can be suitably controlled.

### BRIEF DESCRIPTION OF DRAWINGS

FIG. 1 is a diagram illustrating an example of a wireless communication system.
FIG. 2 is a timing chart for describing an example in which interference occurs among signals that are transmitted by a plurality of wireless equipments to a relay node.
FIG. 3 is a sequence diagram illustrating an example of operation of the wireless communication system of FIG. 1 according to an example which does not embody the present invention.
FIG. 4 is a block diagram illustrating an example of a configuration of a wireless equipment (MUE) for use in the example of FIG. 3.
FIG. 5 is a block diagram illustrating an example of a configuration of a relay node (a relay UE) for use in the example of FIG. 3.
FIG. 6 is a block diagram illustrating an example of a configuration of a base station (eNB) for use in the example of FIG. 3.
FIG. 7 is a sequence diagram illustrating an example of operation of a wireless communication system of FIG. 1 according to an embodiment.
FIG. 8 is a sequence diagram for describing an example of TA estimation processing that is illustrated in FIG. 7.
FIG. 9 is a block diagram illustrating an example of a configuration of a wireless equipment (MUE) according to the embodiment.
FIG. 10 is a block diagram illustrating an example of a configuration of a relay node (a relay UE) according to the embodiment.
FIG. 11 is a block diagram illustrating an example of a configuration of a base station (eNB) according to the embodiment.

### Description of Embodiments

Embodiments will be described below referring to the drawings.

However, the embodiments that will be described below are given as only examples, and this is not intended to exclude various modifications or applications of the technology that will not be specified below. Furthermore, various exemplary embodiments that will be described below may be implemented in suitable combinations. It is noted that, in the drawings that are referred to when the embodiments are described below, portions that are given the same reference numeral are the same or similar, except as otherwise specified.

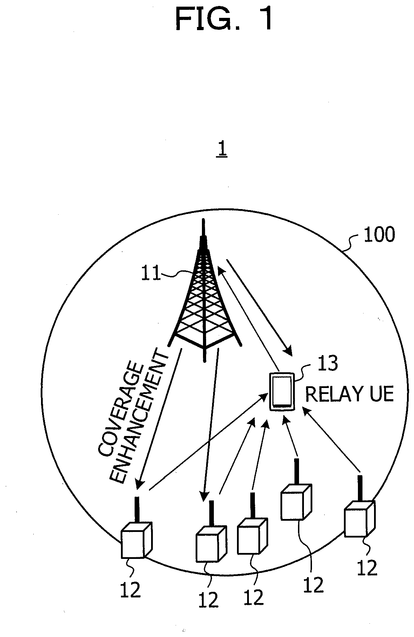

FIG. 1 is a diagram illustrating an example of a wireless communication system. As an example, a wireless communication system 1 that is illustrated in FIG. 1 may include a base station 11, a plurality of User Equipments (UEs) 12, and a relay UE 13.

The base station 11 forms a radio area 100. One base station 11 may form one radio area 100 and may form a plurality of radio areas 100. The radio area 100 is determined according to a range (which may be referred to as "coverage") where a wireless radio wave that is transmitted by the base station 11 propagates.

The "radio area" may be referred to as a "cell", a "coverage area", or a "communication area". The "cell" may be divided into "sector cells".

The base station 11 may be referred as to a "base station (BS)", a "node B (NB)", or an "enhanced NB (eNB)".

In a case where the UE 12 and the relay UE 13 are positioned within the radio area 100, it is possible that the UE 12 and the relay UE 13 communicates wirelessly with the base station 11. The UE 12 and the UE 13 are an example of wireless equipments. The UEs 12 and 13 may be referred to as wireless equipments, mobile terminals, or terminal devices.

The UE 12 may be a sensor device, a meter (a measuring instrument), or the like that has a wireless communication function, which forms a sensor network, as a non-limited example. The relay UE 13 may be a portable telephone, a smartphone, or the like, as a non-limited example.

For convenience, wireless communication between the eNB 11 and the UEs 12 and 13 may be referred to as a "cellular communication". As an example, a wireless communication scheme in compliance with Long Term Evolution (LTE) or LTE-Advanced of the 3rd Generation Partnership Project (3GPP) may be applied to the "cellular communication". For convenience, a signal for the cellular communication may be referred to as a cellular signal for short.

However, the UE 12 does not directly transmit a signal destined for the eNB 11 and transmits the signal via the relay UE 13. In other words, uplink (UL) communication from the UE 12 to the eNB 11 may be performed via the relay UE 13.

In contrast, downlink (DL) communication from the eNB 11 to the UE 12 may be performed via the relay UE 13 and may be directly performed without the relay UE 13 being involved. In other words, not only can the UE 12 receive a signal that is transmitted by the eNB 11, via the relay UE 13, but the UE 12 can also receive the signal directly.

UL communication by the UE 12 is relayed by the relay UE 13 to the eNB 11, and thus, in a case where a signal destined for the base station 11 is directly transmitted, the UE 12 can also perform the UL communication at the low power.

Furthermore, if a radio resource for UL and DL is allocated to the relay UE 13, the eNB 11 gets along without individually allocating a radio resource for the UL communication to many UEs 12. Therefore, the efficiency of utilization of the radio resource for the UL communication can be improved.

In some cases, communication between the UE 12 and the relay UE 13, as already described, is referred to as "device-to-device (D2D)" communication.

For convenience, the UE 12 may be referred to as a "D2D UE 12", an "MTC UE 12", a "remote MTC UE 12", an "MTC device 12", an "MTC node 12", or the like. The "MTC UE 12" may be referred to as an "MUE 12" for short. For convenience, the relay UE 13 may be referred to as a "relay node 13".

In some cases, the MUE 12, such as a sensor device or a meter, is installed in a place where a wireless environment is not satisfactory due to a wireless radio wave being difficult to reach when compared with the outdoor environment where the view is unobstructed, for example, in a building or a basement. For this reason, in some cases, it is preferable that, for the MUE 12, a typical coverage which is provided by the eNB 11 can be enhanced (this is referred to as coverage enhancement (CE)).

For example, in some cases, it is desirable that the coverage is more enhanced to the extent of approximately several dB to several tens of dB (20dB as an example) than the typical coverage in LTE or LTE-advance. Accordingly, as an example of a CE technology, in some cases, a technology referred to as "repetitions" is used.

The "repetitions" is a technology that repeatedly transmits the same signal at different times. For example, the eNB 11 repeats transmission of data signal for the same DL data signal or the same control signal as much as a limited number of times, and thus a rate of reception success in the MUE 12 can be improved. Therefore, coverage for DL communication can be enhanced.

Incidentally, with IoT, various "things" each can be equipped with a communication function. The "things" each of which is equipped with the communication function can be equivalent to the MUEs 12. For this reason, the number of MUEs 12 that can make connections to a wireless access network such as LTE can also be increased.

In the case of the MUE 12 such as a sensor device or a measuring instrument, an amount of data that is transmitted by an individual MUE 12 per one time tends to decrease when compared with the UE such as a portable telephone or a smartphone.

For this reason, in some cases, the MUE 12 is referred to as a lowcost (LC-) MTC device 12. In some cases, MTC in which the LC-MTC device 12 operates is referred to as LC-MTC.

In the LC-MTC, each time transmission data occurs in the MUE 12, for example, when the eNB 11 controls a timing for transmission by an individual MUE 12, an amount of consumed resource for a control channel increases.

For example, the eNB 11 can control a transmission time interval (TTI) for an individual MUE 12 by transmitting a timing advance (TA) command on a control channel for the DL, such as a physical downlink control channel (PDCCH).

However, each time a transmission request occurs in the MUE 12 that transmits a small amount of data per one time, when one TTI is controlled with one TA command, the amount of consumed resource for the control channel, which is used for transmission of the TA command, increases.

Accordingly, in LTE, in some cases, a technology that is referred to as a "TTI bundling" is used. In the TTI bundling, the TA command is executed one time, and thus, the UE can be instructed to transmit the same transmission data in succession over a plurality of TTIs. Therefore, the amount of consumed resource for the control channel that is used the transmission of the TA command can be suppressed.

Although the TTI bundling is used, when a large number of MUEs 12 are arranged in the wireless communication system 1, the transmission of a large number of TA commands by the eNB 11 is desirable.

Accordingly, as already described, the UL communication by the MUE 12 is all directed to the relay UE 13 and is limited to communication via the relay UE 13. Thus, the eNB 11 may transmit the TA command to the relay UE 13 instead of an individual MUE 12.

However, as already described, when direct UL communication from the MUE 12 to the eNB 11 is limited, a physical random access channel (PRACH) signal can be transmitted from the MUE 12 to the eNB 11. For this reason, the eNB 11 has difficult in estimating information (hereinafter referred to as "information relating to TA" for short) relating to TA for the MUE 12.

When the information relating to the TA is difficult to estimate, the eNB 11 has difficulty in suitably controlling the timing for the transmission by an individual MUE 12. Because of this, when many MUEs 12 are present, interference can occur between the UL communication from the MUE 12 to the relay UE 13. When the interference occurs, the probability of the relay UE 13 failing in reception of a signal from the MUE 12 increases.

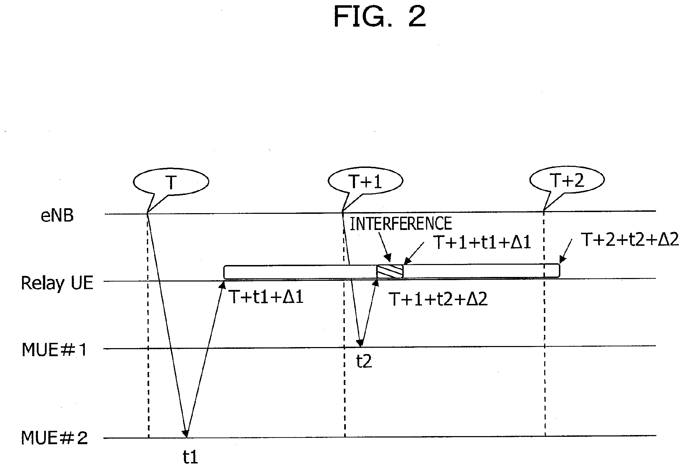

FIG. 2 illustrates that interference occurs between signals (subframes as an example) which are transmitted by two MUEs, MUEs #1 and #2. It is noted that in the case of LTE, the "subframe" has a frame length of 1 ms.

In an example in FIG. 2, a delay in propagation from the eNB 11 to the MUE #1 is t1, and a delay in propagation from the eNB 11 to the MUE #2 is t2. Furthermore, a delay in propagation from the MUE #1 to the relay UE 13 is Δ1, and a delay in propagation from the MUE #2 to the relay UE 13 is Δ2. It is noted that it is assumed that t1 + Δ1 > t2 + Δ2.

It is assumed that the eNB 11 allocates a radio resource (for example, a resource block (RB) for LTE) for the D2D communication at a start timing T for a subframe for the UL to the MUE #1. It is assumed that the allocated RB is an "RB #3".

Because the MUE #1 receives the signal from the eNB 11 with the delay t1 in propagation, a start timing for a subframe that is transmitted by the MUE #1 during the D2D communication is (T + t1). The subframe that is transmitted by the MUE #1 to the relay UE 13 during the D2D communication suffers from the delay of Δ1 in propagation. Because of this, in the relay UE 13, the subframe is received at a timing of (T + t1 + Δ1) and is completely received at a timing of (T + 1 + t1 + Δ1).

At this point, at a start timing (T + 1) for the next subframe, it is assumed that the eNB 11 also allocates an RB #3 for the D2D communication to the MUE #2. Because the MUE #2 receives the signal from the eNB 11 with the delay t2 in propagation, a start timing for a subframe that is transmitted by the MUE #2 during the D2D communication is (T + 1 + t2).

The subframe that is transmitted by the MUE #2 to the relay UE during the D2D communication suffers from the delay of Δ2 in propagation. Because of this, in the relay UE 13, the subframe is received at a timing of (T + 1 + t2 + Δ2) and is completely received at a timing of (T + 2 + t2 + Δ2).

At this point, in the relay UE 13, a reception start timing of (T + 1 + t2 + Δ2) for a subframe that is transmitted by the MUE #2 is earlier than a reception end timing of (T + 1+ t1 + Δ1) for a subframe that is transmitted by the MUE #1. For this reason, two subframes overlap at least partly.

Therefore, if a timing for transmission by the MUEs #1 and #2 to the relay UE 13 is not adjusted, interference occurs between the subframes and thus the relay UE 13 easily fails in the reception of the subframe during the D2D communication.

Accordingly, an example will be described in which, in a situation where the direct UL transmission to the eNB 11 is not available, the MUE 12 can also adjust a timing for transmission by the MUE 12 with the TA command.

For example, the eNB 11 determines an actual transmission timing for the MUE 12 to transmit a data signal for the D2D communication to the relay UE 13, with assistance of the relay UE 13. An example which does not embody the present invention and an embodiment will be described below.

In the example, the eNB 11 may use information relating to the TA for the relay UE 13 for determination and control of an actual timing for the D2D transmission by the MUE 12.

In the embodiment, the relay UE 13 estimates the information relating to the TA for the MUE 12, and reports the estimated information relating to the TA to the eNB 11. The eNB 11 may determine and control an actual timing for the transmission by the MUE 12 based on the information relating to the TA for the MUE 12 and the information for the TA for the relay UE 13, which are reported from the relay UE 13.

It is noted that the "information relating to the TA for the relay UE 13" means information relating to TA between the relay UE 13 and the eNB 11 and is first information relating to the TA. Because any one of the UL and DL communications with the eNB 11 can be directly performed, the relay UE 13 can receive the TA command from the eNB 11 in a periodic or aperiodic manner.

The relay UE 13 may store the information relating to the TA that is indicated by the TA command which is received in a periodic or aperiodic manner, in a storage unit, and may update such the information relating to the TA. The information relating to the TA that is stored in the storage unit may be transmitted as the "information relating to the TA for the relay UE 13" from the relay UE 13 to the eNB 11.

In contrast, "information relating to the TA for the MUE 2 that is estimated by the relay UE 13 means information relating to TA between the MUE 2 and the relay UE 13, and is an example of second information relating to the TA.

### (Example)

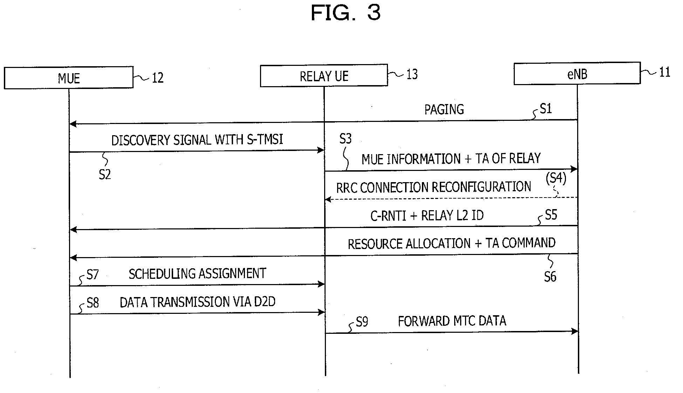

FIG. 3 illustrates operation of a wireless communication system according to an example which does not embody the present invention.

As illustrated in FIG. 3, the eNB 11 transmits paging information (which may also be referred to as a "paging signal") over the DL with the CE (Step S1). The paging information is an example of information that is transferred on a paging channel which is an example of the control channel.

When receiving the paging information that is transmitted by the eNB 11 on the paging channel for the DL, the MUE 12 may transmit a discovery signal (DS) (Step S2). The DS is an example of a signal for searching for and discovering the relay UE 13. An S-TMSI may be included in the DS.

The "S-TMSI" is an acronym for "SAE temporary mobile subscriber identity", and "SAE" is an acronym for "System Architecture Evolution". The "S-TMSI" is an example of a temporary identifier (MUE ID) that is allocated to the MUE 12.

When receiving the DS that is transmitted by the MUE 12, the relay UE 13 may transmit information (for example, the S-TMSI) of the MUE 12 and the information relating to the TA for the relay UE 13 to the destination eNB 11 (Step S3). As an example, the relay UE 13 may transmit these pieces of information to the destination eNB 11, using the PRACH, a physical uplink control channel (PUCCH), a physical uplink shared channel (PUSCH), or the like.

The PRACH is used in a case where the relay UE 13 initially accesses the eNB 11, or in a case where a radio resource control (RRC) connection between the relay UE 13 and the eNB 11 is re-established.

For example, the relay UE 13 may notify the eNB 11 of the information of the MUE 12 and the information relating to the TA for the relay UE 13 using a random access (RA) preamble, and may notify the eNB 11 of the pieces of information using an RRC connection re-establishment request signal.

In a case where the RRC connection re-establishment request signal is used, the eNB 11 may transmit an RRC connection reconfiguration signal to the relay UE 13 (Step S4). The relay UE 13 receives the RRC connection reconfiguration signal, and thus, possibly transmits the RRC connection re-establishment request signal to the eNB 11.

On the other hand, if an RRC connection between the relay UE 13 and the eNB 11 is completely established and thus the PUCCH or the PUSCH is in an available state, the relay UE 13 may notify the eNB 11 of the information of the MUE 12 and the information relating to the TA for the relay UE 13 on the PUCCH or the PUSCH.

When receiving the information of the MUE 12 and the information relating to the TA for the relay UE 13 from the relay UE 13, the eNB 11 may transmit a C-RNTI and a Layer 2 identifier (a relay UE L2 ID) of the relay UE 13 to the destination MUE 12, with the CE for the DL (Step S5).

The "C-RNTI" is an acronym for "cell-radio network temporary identifier" and is an example of a temporary cell identifier that is allocated by the eNB 11 to the MUE 12. As an example, the PDSCH that is an example of a data channel for the DL may be used for the transmission of the C-RNTI and a relay UE Layer 2 ID.

For example, the eNB 11 may notify the MUE 12 of the C-RNTI and the relay UE Layer 2 ID using a random access response message that is transmitted to the MUE 12 on the PDSCH.

It is noted that a network relay is a Layer 3 relay, but can be enhanced for a Layer 2 relay in order to assist the eNB 11. For this reason, the eNB 11 may transmit an ID of Layer 2 to the destination MUE 12.

In the Layer 2 relay, a radio (RF) signal that is received is demodulated and decoded, and then, an RF signal that results from coding and modulating the received radio signal back may be transmitted. In the Layer 2 relay, because the reception signal is coded and modulated back, an effect of reducing degradation in reception performance due to other cell interference and noise amplification can be expected. In the Layer 2 relay, re-transmission processing of or transfer processing of user data may be unnecessary.

The eBN 11 may transmit information on allocation of a resource that is used by the MUE 12 for the D2D communication with the relay UE 13, and the TA command that is determined based on the information relating to the TA for the relay UE 13, to the destination MUE 12 (Step S6). For convenience, the resource that is used for the D2D communication may be referred to as a "D2D resource".

As an example, the PDCCH that is an example of the control channel for the DL may be used for transmission of information on allocation of the D2D resource and the TA command. It is noted that Step S5 and Step S6 may be integrated into one step.

According to the information on the allocation of the D2D resource, which is received from the eNB 11, the MUE 12 may transmit a scheduling assignment (SA) message to the destination relay UE 13 (Step S7). As an example, SA indicates frequency-domain and time-domain position of a reception resource that is associated with a physical channel which is carried by a transmission data signal of the MUE 12.

Thereafter, the MUE 12 may transmit D2D data signal destined for the relay UE 13 to the relay UE 13 at a timing for transmission that is designated with the TA command (Step S8). When receiving the D2D data signal from the MUE 12, the relay UE 13 may transfer the received D2D data signal to the destination eNB 11 (Step S9).

As described above, according to this example, the eNB 11 can determine the information relating to the TA for the MUE 12 in which direct UL communication with the eNB 11 is not available (in other words, is limited), based on the information relating to the TA for the relay UE 13, and can transmit the TA command to the MUE 12.

In other words, the eNB 11 may adjust or control a timing for the transmission of the D2D data signal that is transmitted by the MUE 12 to the relay UE 13 based on the information relating to the TA between the relay UE 13 and the eNB 11, not based on information relating to TA between an individual MUE 12 and the relay UE 13.

This reason is because in some cases, in a situation where a plurality of MUEs 12 is connectable to the relay UE 13, although distances between an individual MUE 12 and the relay UE 13 are the same or different, a wide variation may be handled as being approximately absent.

In such a case, although a timing for transmission by an individual MUE 12 to the relay UE 13 is controlled in a simplified manner based on the information relating to the TA between the relay UE 13 and the eNB 11, the probability of interference occurring between transmission signals of different MUEs 12 can be reduced to some degree.

### (Examples of configurations of the MUE, the relay UE, and the eNB)

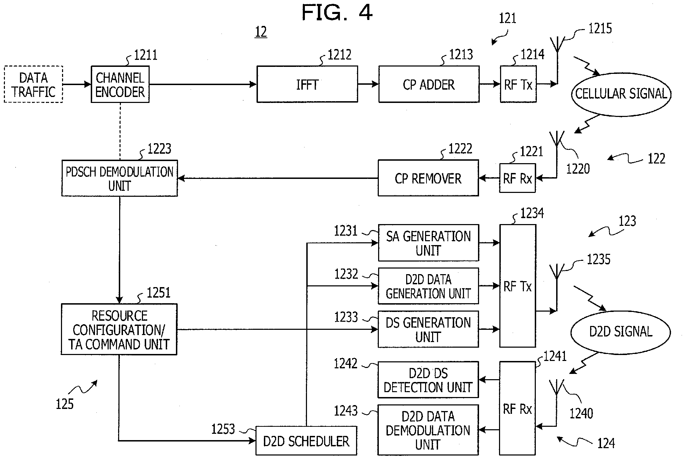

Next, examples of configurations of the MUE 12, the relay UE 13, and the eNB 11 according to this example, which are described above, will be described below with reference to FIGs. 4 to 6.

### (Example of the Configuration of the MUE 12)

FIG. 4 is a block diagram illustrating an example of the configuration of the MUE 12. As illustrated in FIG. 4, as an example, the MUE 12 may include a transmission processing unit 121 and a reception processing unit 122, which are dedicated for the cellular communication, a transmission processing unit 123 and a reception processing unit 124, which are dedicated from the D2D communication, and a control unit 125.

The reception processing unit 122 dedicated for the cellular communication and the transmission processing unit 123 dedicated for the D2D communication may be taken as an example of communication units that receive a signal for the DL from the eNB 11 without the relay UE 13 being involved and transmits a signal for the UL to the eNB 11 via the relay UE 13.

As an example, the transmission processing unit 121 dedicated for the cellular communication may include a channel encoder 1211, an Inverse Fast Fourier Transformer (IFFT) 1212, a cyclic prefix (CP) adder 1213, and a radio (RF) transmission unit 1214, and a transmission antenna 1215.

As an example, the channel encoder 1211 channel-codes data traffic that is transmitted through the UL cellular communication.

As an example, the IFFT 1212 performs Inverse Fast Fourier Transform (IFFT) on the channel-coded data traffic. The data traffic that is a signal (for example, a baseband signal) in the frequency domain is converted by the IFFT into a signal in the time domain.

As an example, the CP adder 1213 adds a CP to the signal in the time domain, which is obtained in the IFFT 1212. With the addition of the CP, interference between transmission signal symbols or interference between subcarriers can be suppressed.

As an example, the RF transmission unit 1214 converts a transmission baseband signal, to which the CP is added, into a radio frequency and transmits the radio frequency through the transmission antenna 1215.

On the other hand, as an example, the reception processing unit 122 dedicated for the cellular communication may include a reception antenna 1220, an RF reception unit 1221, a cyclic prefix (CP) remover 1222, and a PDSCH demodulation unit 1223.

As an example, the RF reception unit 1221 converts a radio signal for the cellular communication for the DL, which is received through the reception antenna 1220, into a baseband signal.

As an example, the CP remover 1222 removes the CP that is added to the reception baseband signal.

As an example, the PDSCH demodulation unit 1223 demodulates a signal on the PDSCH that is an example of the data channel for the DL, from the reception baseband signal from which the CP is removed.

As an example, the transmission processing unit 123 dedicated for the D2D communication may include a schedule assignment (SA) generation unit 1231, a D2D data generation unit 1232, a discovery signal (DS) generation unit 1233, and an RF transmission unit 1234, and a transmission antenna 1235.

As an example, the SA generation unit 1231 generates the already-described SA.

As an example, the D2D data generation unit 1232 generates the D2D data signal.

As an example, the DS generation unit 1233 generates the already-described discovery signal (DS) for searching for and discovering the relay UE 13.

As an example, the RF transmission unit 1234 converts a signal that is generated by each of the generation units 1231 to 1233 described above, into a radio frequency signal, and transmits the radio frequency signal from the transmission antenna 1235.

A block that includes the DS generation unit 1233 and the RF transmission unit 1234 may be taken as an example of a transmission unit that transmits the DS.

On the other hand, as an example, the reception processing unit 124 dedicated for the D2D communication may include a reception antenna 1240, an RF reception unit 1241, a D2D DS detection unit 1242, and a D2D data signal demodulation unit 1243.

The RF reception unit 1241 converts the radio signal for the D2D communication, which is received in the reception antenna 1240, into a baseband signal.

As an example, the D2D DS detection unit 1242 detects a DS, which is transmitted by any other UE 12, from the reception baseband signal.

As an example, the D2D data signal demodulation unit 1243 demodulates the D2D data signal from the reception baseband signal.

As an example, with the information relating to the TA for controlling a timing for transmission of the signal for the UL, which is received with the signal for the DL from the eNB 11, the control unit 125 of the MUE 12 may control a timing for transmission of the signal for the UL. The information relating to the TA is information that is determined in the eNB 11 using information relating to TA between the eNB 11 and the relay UE 13.

As a non-limited example, the control unit 125 may include a resource configuration/ TA command unit 1251, and a D2D scheduler 1253.

As an example, the resource configuration/ TA command unit 1251 performs configuration of the D2D resource based on resource allocation information that is obtained from the signal that results from the demodulation in the PDSCH demodulation unit 1223, and the TA command. With the configuration of the D2D resource, which is based on the TA command, it is possible that the timing for the transmission of the D2D data signal is controlled at a timing in accordance with the TA command.

As an example, the D2D scheduler 1253 performs scheduling of the D2D resource that is used for the transmission of each of the already-described SA, the D2D data signal, and the DS, according to the resource configuration by the resource configuration/ TA command unit 1251.

### (Example of the Configuration of the Relay UE 13)

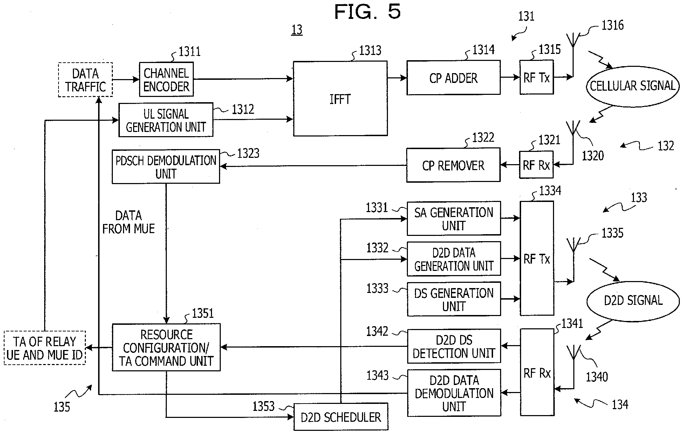

FIG. 5 is a block diagram illustrating an example of the configuration of the relay UE 13. As illustrated in FIG. 5, as an example, the relay UE 13 may include a transmission processing unit 131 and a reception processing unit 132, which are dedicated for the cellular communication, a transmission processing unit 133 and a reception processing unit 134, which are dedicated from the D2D communication, and a control unit 135.

As an example, the reception processing unit 134 dedicated for the D2D communication and transmission processing unit 131 dedicated for the cellular communication may be taken as an example of a communication unit that relays the signal for the UL, which is transmitted by the MUE 12 that receives the signal for the DL from the eNB 11, to the eNB 11.

The transmission processing unit 131 dedicated for the cellular communication is an example of a transmission unit that transmits the information relating to the TA between the eNB 11 and the relay UE 13, as information that is used for the eNB 11 to control with the signal for the DL the timing for the transmission of the signal for the UL by the MUE 12, to the eNB 11.

As a non-limited example, the transmission processing unit 131 may include a channel encoder 1311, a UL signal generation unit 1312, an IFFT 1313, a CP adder 1314, an RF transmission unit 1315, and a transmission antenna 1316.

As an example, the channel encoder 1311 channel-codes the data traffic that is transmitted through the cellular communication for the UL. Traffic of the D2D data signal that is received in the reception processing unit 134 dedicated for the D2D communication may be included in data traffic that is coded in the channel encoder 1311, which is not limited to the data traffic that is generated in the relay UE 13.

As an example, the UL signal generation unit 1312 generates the signal (for example, a PRACH signal, the RRC connection re-establishment request signal, a PUCCH signal, the PUSCH signal, or the like) for the UL, which is destined for the eNB 11.

As illustrated in Step S3 in FIG. 3, in a case where an MUE ID and the information relating to the TA for the relay UE 13 are notified to the eNB 11 using the PRACH, the UL signal generation unit 1312 may generate the PRACH signal that includes a RA preamble which includes these pieces of information.

In a case where the MUE ID and the information relating to the TA for the relay UE 13 are notified to the eNB 11 using the RRC connection re-establishment request signal, the UL signal generation unit 1312 may generate the RRC connection re-establishment request signal that includes an information set that contains these.

In a case where the MUE ID and the information relating to the TA for the relay UE 13 are notified to the eNB 11 using the PUCCH, the UL signal generation unit 1312 may generate the PUCCH signal that includes the information set that contains these.

In a case where the MUE ID and the information relating to the TA for the relay UE 13 are notified to the eNB 11 using the PUSCH, the UL signal generation unit 1312 may generate the PUSCH signal that includes the information set that contains these.

As an example, the IFFT 1313 performs the IFFT on output signals of the channel encoder 1311 and the UL signal generation unit 1312, and thus, converts the output signals from signals in the frequency domain into signals in the time domain.

The CP adder 1314 adds the CP to the transmission baseband signal in the time domain, which is an output signal of the IFFT 1313.

As an example, the RF transmission unit 1315 converts the transmission baseband signal, to which the CP is added, into a radio frequency and transmits the radio frequency through the transmission antenna 1316.

On the other hand, as an example, the reception processing unit 132 dedicated for the cellular communication may include a reception antenna 1320, an RF reception unit 1321, a CP remover 1322, and a PDSCH demodulation unit 1323.

As an example, the RF reception unit 1321 converts the radio signal for the cellular communication for the DL, which is received through the reception antenna 1320, into a baseband signal.

As an example, the CP remover 1322 removes the CP that is added to the reception baseband signal.

As an example, the PDSCH demodulation unit 1323 demodulates the signal on the PDSCH that is an example of the data channel for the DL, from the reception baseband signal from which the CP is removed.

As an example, the transmission processing unit 133 dedicated for the D2D communication may include an SA generation unit 1331, a D2D data generation unit 1332, a DS generation unit 1333, and an RF transmission unit 1334, and a transmission antenna 1335.

As an example, the SA generation unit 1331 generates the SA.

As an example, the D2D data generation unit 1332 generates the D2D data signal.

As an example, the DS generation unit 1333 generates the DS for searching for and discovering the UE 12 or the UE 13.

As an example, the RF transmission unit 1334 converts a signal that is generated by each of the generation units 1331 to 1333 described above, into a radio frequency signal, and transmits the radio frequency signal from the transmission antenna 1335.

On the other hand, as an example, the reception processing unit 134 dedicated for the D2D communication may include a reception antenna 1340, an RF reception unit 1341, a D2D DS detection unit 1342, and a D2D data demodulation unit 1343.

The RF reception unit 1341 converts the radio signal for the D2D communication, which is received in the reception antenna 1340, into a baseband signal.

As an example, the D2D DS detection unit 1342 detects a DS, which is transmitted by the UE 12 or any other UE 13, from the reception baseband signal.

A block that includes the RF reception unit 1341 and the D2D DS detection unit 1342 is taken as an example of a reception unit that receives the DS which is transmitted by the MUE 12.

As an example, the D2D data demodulation unit 1343 demodulates the D2D data signal from the reception baseband signal. The demodulated D2D data signal may be channel-coded in the channel encoder 1311, and the resulting signal may be transmitted from the transmission antenna 1316 to the destination eNB 11.

As an example, the control unit 135 of the relay UE 13 may include a resource configuration/ TA command unit 1351 and a D2D scheduler 1353.

As an example, the resource configuration/ TA command unit 1351 performs the configuration of the D2D resource based on the resource allocation information that is obtained from the signal that results from the demodulation in the PDSCH demodulation unit 1323, and the TA command. With the configuration of the D2D resource, which is based on the TA command, it is possible that the timing for the transmission of the D2D data signal is controlled at the timing in accordance with the TA command.

Furthermore, the resource configuration/ TA command unit 1351 may output the MUE ID that is included in the DS which is detected in the D2D DS detection unit 1342, along with the information relating to the TA for the relay UE 13, to the UL signal generation unit 1312.

As an example, the D2D scheduler 1353 performs the scheduling of the D2D resource that is used for the transmission of each of the already-described SA, the data signal, and the DS, according to the resource configuration by the resource configuration/ TA command unit 1351.

### (Example of the Configuration of the eNB 11)

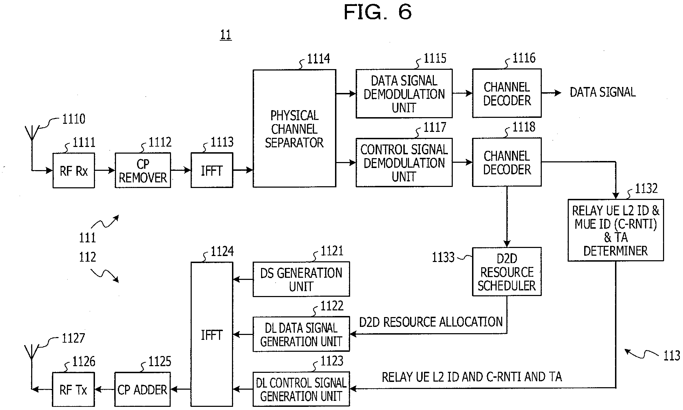

FIG. 6 is a block diagram illustrating an example of the configuration of the eNB 11. As illustrated in FIG. 6, as an example, the eNB 11 may include a UL reception processing unit 111, a DL transmission processing unit 112, and a control unit 113.

The reception processing unit 111 may be taken as an example of a reception unit that receives information on TA between the relay UE 13 and the eNB 12, from the relay UE 13 that relays the signal for the UL that is transmitted by the MUE 12.

As a non-limited example, the reception processing unit 111 may include a reception antenna 1110, an RF reception unit 1111, a CP remover 1112, a Fast Fourier Transformer (FFT) 1113, and a physical channel separator 1114. Furthermore, the reception processing unit 111 may include a data signal demodulation unit 1115, a control signal demodulation unit 1117, and channel decoders 1116 and 1118.

The RF reception unit 1111 converts a radio signal for the cellular communication for the UL, which is received through the reception antenna 1110, into a baseband signal.

As an example, the CP remover 1112 removes the CP that is added to the reception baseband signal.

As an example, the FFT 1113 performs Fast Fourier Transform (FFT) on the reception baseband signal from which the CP is removed, and thus converts the reception baseband signal from a signal in the time domain and a signal in the frequency domain.

As an example, the physical channel separator 1114 separates the reception baseband signal in the post-FFT frequency domain into signals for physical channels for the UL. Examples of the physical channel for the UL include the PUSCH, the PUCCH, and the PRACH.

The PUSCH is an example of the data channel for the UL. The PUCCH is an example of the control channel of the UL.

As an example, the data signal demodulation unit 1115 demodulates data channel signal that results from the separation in the physical channel separator 1114.

As an example, the channel decoder 1116 decodes the data channel signal that is demodulated in the data signal demodulation unit 1115.

As an example, the control signal demodulation unit 1117 demodulates a control channel signal (which may be referred to as a "control signal"), which results from the separation in the physical channel separator 1114.

As an example, the channel decoder 1118 decodes the control signal that results from the demodulation in the control signal demodulation unit 1117.

On the other hand, as an example, the DL transmission processing unit 112 may include a paging signal generation unit 1121, a DL data signal generation unit 1122, a DL control signal generation unit 1123, an IFFT 1124, a CP adder 1125, a RF transmission unit 1126, and a transmission antenna 1127.

As an example, the paging signal generation unit 1121 generates the paging signal that is illustrated in Step S3 in FIG. 3.

A block that includes the paging signal generation unit 1121, the IFFT 1124, the CP adder 1125, and the RF transmission unit 1126 may be taken as an example of a transmission unit that transmits the paging signal.

As an example, the DL data signal generation unit 1122 generates the DL data signal (for example, a PDSCH signal). The DL data signal may be generated based on information on allocation of the D2D resource by the D2D resource scheduler 1133 of the control unit 113, which will be described below.

As an example, the DL control signal generation unit 1123 generates a DL control signal (for example, a PDCCH signal). The C-RNTI and the relay UE Layer 2 ID, which are already described with reference to Step S5 in FIG. 3, may be included in the DL control signal. Furthermore, the information relating to the TA that is determined in a determiner 1132 of the control unit 113, which will be described below, may be included in the DL control signal.

As an example, the IFFT 1124 performs the IFFT on signals that are generated in the generation units 1121 to 1123 described above, and performs signal conversion from the frequency domain to the time domain.

As an example, the CP adder 1125 adds a CP to the signal in the time domain, which is obtained in the IFFT 1124.

As an example, the RF transmission unit 1126 converts the signal (the transmission baseband signal), to which the CP is added in the CP adder 1125, into a radio frequency and transmits the radio frequency through the transmission antenna 1127.

As an example, the control unit 113 of the eNB 11 controls a timing at which the MUE 12 transmits the signal for the UL, with the signal for the DL to the MUE 12, using the information relating to the TA that is received from the relay UE 13.

As a non-limited example, the control unit 113 may include the determiner 1132 that determines the relay UE layer 2 ID, the MUE ID, and the information relating to the TA, and the D2D resource scheduler 1133.

As an example, the determiner 1132 determines pieces of information (for example, the relay UE layer 2 ID, the C-RNTI, and the information relating to the TA) that are notified to the MUE 12 in Steps S5 and S6 in FIG. 3, based on the control signal that results from the decoding in the channel decoder 1118.

As an example, the D2D resource scheduler 1133 determines the information (for example, the information on the allocation of the D2D resource) that is notified to the MUE 12 in Step S6 in FIG. 3, based on the control signal that results from the decoding in the channel decoder 1118.

### (Embodiment)

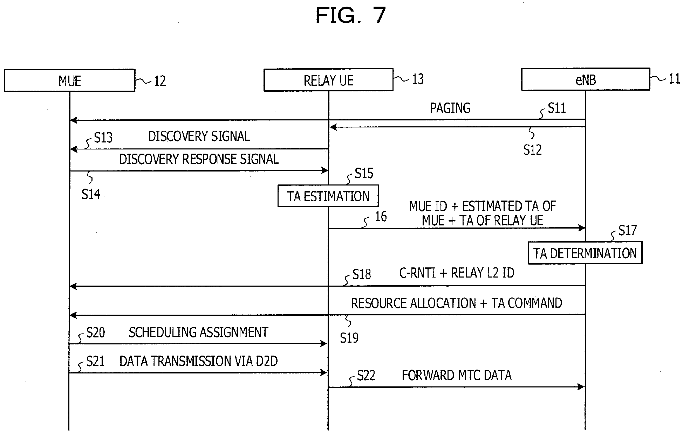

Next, an example of and an operation according to an embodiment will be described with reference to FIG. 7.

As illustrated in FIG. 7, in the same manner as in the above-described example, the eNB 11 transmits the paging information over the DL (Steps S11 and S12).

When the paging information is received in the relay UE 13, the relay UE 13 may transmit the DS in order to search for and discover the MUE 12 that performs the D2D communication with the relay UE 13 (Step S13).

When receiving the DS that is transmitted by the relay UE 13, the MUE 12 may transmit a DS response signal that is a response to the DS, to the destination relay UE 13 that is a transmission source of the DS (Step S14). The S-TMSI, as an example of the MUE ID, may be included in the DS response signal.

When receiving the DS response signal from the MUE 12, the relay UE 13 may estimate the information relating to the TA between the MUE 12 and the relay UE 13 (Step S15).

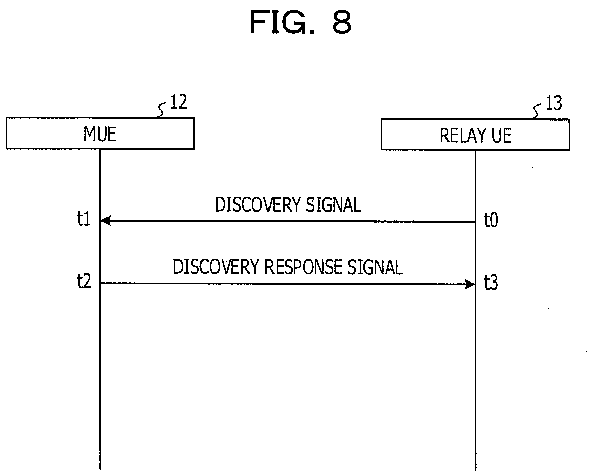

For example, as illustrated in FIG. 8, it is assumed that a timing for transmission of the DS that is transmitted by the relay UE 13 in Step S13 is "t0", and that a timing at which the DS is received by the MUE 12 is "t1".

Furthermore, it is assumed that a timing for transmission of the DS response signal that is transmitted by the MUE 12 in Step S14 is "t2", and that a timing at which the relay UE 13 receives the DS response signal is "t3".

In this case, a delay td in propagation between the MUE 12 and the relay UE 13 can be estimated as td = [(t3-t0)-(t2-t1)]/2. Consequently, the relay UE 13 can estimate the information relating to the TA for the MUE 12 as 2×td. It is noted that, as an example, information which is a difference (= t2-t1) between the timings described may be transmitted by the MUE 12 to the relay UE 13. For example, the MUE 12 may include the information that is the difference (= t2-t1) between the timings for the DS, in the DS response signal described above.

It is noted that a method of estimating the information relating to the TA is only an example, and thus other estimation methods may be used. For example, in a procedure for random access between the MUE 12 and the relay UE 13, the information relating to the TA may be estimated using an RA preamble correlation.

When the information relating to the TA is estimated, the relay UE 13, as illustrated in FIG. 7, the MUE ID, the estimated information relating to the TA, and the information relating to the TA for the relay UE 13 may be transmitted to the destination eNB 11 (Step S16).

As an example, the PRACH, the PUCCH, the PUSCH, or the like may be used for transmission of these pieces of information.

The PRACH is used in the case where the relay UE 13 initially accesses the eNB 11, or in the case where the radio resource control (RRC) connection between the relay UE 13 and the eNB 11 is re-established.

For example, the relay UE 13 may notify the eNB 11 of the MUE ID, the estimated information relating to the TA, and the information relating to the TA for the relay UE 13, using the random access (RA) preamble, and may notify the eNB 11 of the pieces of information using the RRC connection re-establishment request signal.

In the case where the RRC connection re-establishment request signal is used, the eNB 11 may transmit the RRC connection reconfiguration signal to the relay UE 13. The relay UE 13 receives the RRC connection reconfiguration signal, and thus, possibly transmits the RRC connection re-establishment request signal to the eNB 11.

On the other hand, if the RRC connection between the relay UE 13 and the eNB 11 is completely established and thus the PUCCH or the PUSCH is in an available state, the relay UE 13 may notify the eNB 11 of the three pieces of information described above, using the PUCCH or the PUSCH.

When the three pieces of information are received from the relay UE 13, the eNB 11 may determine the information relating to the TA for the MUE 12 (Step S17). As a non-limited state, the eNB 11 may determine the smaller-sized information relating to the TA, of the information relating to the TA that is estimated in the relay UE 13 and the information relating to the TA for the relay UE 13, or a value of an average of the pieces of information relating to the TA, as the information relating to the TA for MUE 12.

When the information relating to the TA for the MUE 12 is determined, the relay UE 13 may transmit the C-RNTI and the Layer 2 identifier of the relay UE 13 (the relay UE L2 ID), to the destination MUE 12, with the CE for the DL (Step S18). As an example, the PDSCH that is an example of the data channel for the DL may be used for the transmission of the C-RNTI and the relay UE Layer 2 ID.

For example, the eNB 11 may notify the MUE 12 of the C-RNTI and the relay UE Layer 2 ID using the random access response message that is transmitted to the MUE 12 on the PDSCH.

Additionally, the eBN 11 may transmit the information on the D2D resource that is allocated by the MUE 12 for the relay UE 13, and the TA command in accordance with the information relating to the TA that is determined in Step S17, to the destination MUE 12 (Step S19).

As an example, the allocation of the D2D resource may be performed according to "Mode 1" that is specified in "3GPP Release 12". "Mode 1" is also referred to as "scheduled resource allocation".

In "Mode 1", the MUE 12 performs a request for allocation of a resource to the eNB 11, in a state where the RRC connection to the eNB 11 is established. When the request is received, the eNB 11 schedules a resource that is used for transmission and reception of a control channel and a data channel for a physical sidelink with the MUE 12 that is a source of the request.

The MUE 12 transmits "ProSE BSR" to the eNB 11, and thus notifies the eNB 11 of information relating to an amount of data that is desired to be transmitted directly to the eNB 11, and then, transmits a scheduling request (SR) to the destination eNB 11.

"ProSE BSR" is an acronym for "proximity-based services buffer status report". The SR may be transmitted on an individual channel (the SR in this case referred to as a dedicated SR) and may be transmitted on a random access channel.

Based on "ProSE BSR" that is received from the MUE 12, the eNB 11 schedules a resource commensurate with an amount of data that the MUE 12 desires to transmit. It is noted that in Step S6 which is illustrated in FIG. 3, the allocation of the D2D resource may be performed according to "Mode 1".

As an example, the PDCCH that is an example of the control channel for the DL may be used for the transmission of the information on the allocation of the D2D resource and the TA command in Step S19 in FIG. 7. It is noted that Step S18 and Step S19 may be integrated into one step.

According to the information on the allocation of the D2D resource, which is received from the eNB 11, the MUE 12 may transmit the SA message to the destination relay UE 13 (Step S20).

Thereafter, the MUE 12 may transmit the D2D data signal destined for the relay UE 13 to the relay UE 13 at the timing for the transmission that is designated with the TA command (Step S21). When receiving the D2D data signal from the MUE 12, the relay UE 13 may transfer the received D2D data signal to the destination eNB 11 (Step S22).

As described above, according to the embodiment, the eNB 11 adjusts or controls the timing for the transmission by the MUE 12 based on the information relating to the TA between an individual MUE 12 and the relay UE 13, and the information relating to the TA between the relay UE 13 and the eNB 11, differently than in the example.

Therefore, the probability that interference will occur among signals that are transmitted by a plurality of MUEs 12 that perform limited direct UL communication with the eNB 11, to the destination relay UE 13, can be much more decreased than in the example.

(Examples of the Configurations of the MUE, the relay UE, and the eNB)

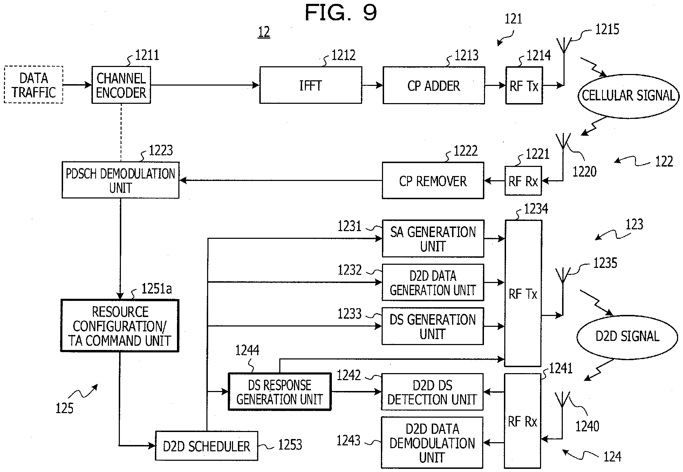

Next, examples of configurations of the MUE 12, the relay UE 13, and the eNB 11 according to the embodiment, which are described above, will be described below with reference to FIGs. 9 to 11.

### (Example of the Configuration of the MUE 12)

FIG. 9 is a block diagram illustrating an example of the configuration of the MUE 12 according to the embodiment. The difference is that in the example of the configuration which is illustrated in FIG. 9, a DS response generation unit 1244 is additionally included, when compared with the example of the configuration that is illustrated in FIG. 4 in the example. Furthermore, the difference is also that in the control unit 125, instead of the resource configuration/ TA command unit 1251, a resource configuration/ TA command unit 1251a is included.

For example, when a DS signal that is illustrated in Step S13 in FIG. 7 is detected in the D2D DS detection unit 1242, the DS response generation unit 1244, for example, generates the DS response signal that is illustrated in Step S14 in FIG. 7. As an example, the DS response signal that is generated in the DS response generation unit 1244 is transmitted from the transmission antenna 1235 toward the relay UE 13 through the RF transmission unit 1234.

In the same manner as in the example, based on the resource allocation information that is obtained from the signal that results from the demodulation in the PDSCH demodulation unit 1223, and the TA command, the resource configuration/ TA command unit 1251a performs the configuration of the D2D resource. In the same manner as in the example, with the configuration of the D2D resource, which is based on the TA command, it is possible that the timing for the transmission of the D2D data signal is controlled at the timing in accordance with the TA command.

However, in the embodiment, the TA command that is obtained from the signal that results from the demodulation in the PDSCH demodulation unit 1223 is an example of the information relating to the TA, which is determined by the eNB 11 based on the information relating to the TA that is estimated by the relay UE 13 and the information relating to the TA for the relay UE 13.

Therefore, the control unit 125 of the MUE 12 according to the embodiment controls the timing for the transmission of the signal for the UL, using the information relating to the TA that is estimated by the relay UE 13, and the TA command that is determined in the eNB 11 based on the information relating to the TA for the relay UE 13.

### (Example of the Configuration of the Relay UE 13)

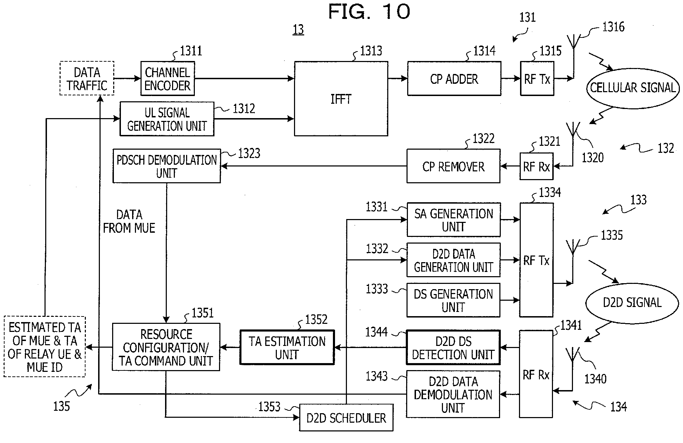

FIG. 10 is a block diagram illustrating an example of the configuration of the relay UE 13 according to the embodiment. The difference is that in the example of the configuration that is illustrated in FIG. 10, for example, a DS response detection unit 1344 is included instead of the D2D DS detection unit 1342, when compared with the example of the configuration that is illustrated in FIG. 5 in the example. Furthermore, the difference is also that a TA estimation unit 1352 is additionally included in the control unit 135.

As an example, the DS response detection unit 1344 detects the DS response signal that is transmitted by the MUE 12, as illustrated in Step S14 in FIG. 7.

As an example, when the DS response signal is detected in the DS response detection unit 1344, the TA estimation unit 1352, as illustrated in FIG. 8, estimates the information relating to the TA between the MUE 12 that is a transmission source of the DS response signal, and the relay UE 13.

As an example, the estimated information relating to the TA, along with an ID of the MUE 12 that is the transmission source of the DS response signal, may be provided to the resource configuration/ TA command unit 1351. The resource configuration/ TA command unit 1351 may provide the MUE ID, the information relating to the TA that is estimated in the TA estimation unit 1352, and information relating to TA between the relay UE 13 and the eNB 13 to the MUE ID UL signal generation unit 1312.

Accordingly, the UL signal generation unit 1312 can generate a UL signal destined for the eNB 11, which includes the MUE ID, the information relating to the TA that is estimated in the TA estimation unit 1352, and the information relating to the TA between the relay UE 13 and the eNB 13. The generated UL signal is transmitted to the destination eNB 11, as illustrated in Step S16 in FIG. 7, through the RF transmission unit 1315 and the transmission antenna 1316.

### (Example of the Configuration of the eNB 11)

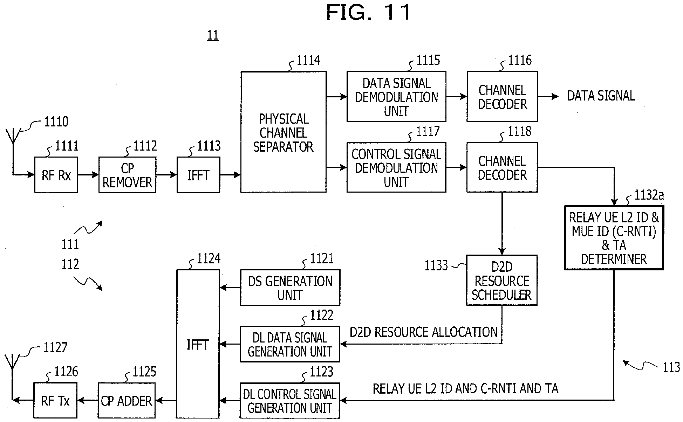

FIG. 11 is a block diagram illustrating an example of the configuration of the eNB 11 according to the embodiment. The difference is that in the example of the configuration which is illustrated in FIG. 11, a determiner 1132a is included instead of the determiner 1132 in FIG. 6, when compared with the example of the configuration that is illustrated in FIG. 6 in the example.

The determiner 1132a performs determination processing that is illustrated in Step S17 in FIG. 7, based on information that is acquired from a UL control signal, which is transmitted by the relay UE 13, through the demodulation and the decoding by the control signal demodulation unit 1117 and the channel decoder 1118, respectively.

For example, the determiner 1132a determines the relay UE Layer 2 ID, the MUE ID (for example, the C-RNTI), and the information relating to the TA for the MUE 12.

At this point, the information relating to the TA between the MUE 12 and the relay UE 13, and the information relating to the TA between the relay UE 13 and the eNB 11 are included in the information that is acquired through the demodulation and the decoding by the control signal demodulation unit 1117 and the channel decoder 1118, respectively.

Therefore, the determiner 1132a, as already described with reference to Step S17 in FIG. 7, may determine the smaller-sized information relating to the TA, of the two pieces of information relating to the TA, or the value of the average of the pieces of information relating to the TA, as the information relating to the TA for the MUE 12.

The information set that is determined in the determiner 1132a may be provided to the DL control signal generation unit 1123. Accordingly, as an example, the DL control signal generation unit 1123 can generate the DL control signal that includes at least one of the relay UE layer 2 ID, the MUE ID, and the information relating to the TA for the MUE 12, which are determined in the determiner 1132a. The generated DL control signal is transmitted to the destination MUE 12, through the RF transmission unit 1126 and the transmission antenna 1127.

### (Others)

The example and the embodiment may be implemented in combination. For example, in a case where it can be determined that distances from a plurality of MUEs 12 to the relay UE 13 are approximately the same, the relay UE 13 may operate according to the example, and, in a case where it can be determined that a variation in the distance is present, may operate according to the embodiment.

As an example, the presence or absence of the variation according to the distance in the relay UE 13 may be determined based on a quality indicator, such as a received power of a signal that is received from the MUE 12, and may be determined based on positional information on the MUE 12, which is obtained using a GPS or the like. The "GPS" is an acronym for "global positioning system".

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the scope of the invention.

### Reference Signs List

1 WIRELESS COMMUNICATION SYSTEM
11 BASE STATION (eNB)
111 RECEPTION PROCESSING UNIT (UL)
1110 RECEPTION ANTENNA
1111 RF RECEPTION UNIT
1112 CP REMOVER
1113 FAST FOURIER TRANSFORMER (FFT)
1114 PHYSICAL CHANNEL SEPARATOR
1115 DATA SIGNAL DEMODULATION UNIT
1116, 1118 CHANNEL DECODER
1117 CONTROL SIGNAL DEMODULATION UNIT
112 TRANSMISSION PROCESSING UNIT (DL)
1121 PAGING SIGNAL GENERATION UNIT
1122 DL DATA SIGNAL GENERATION UNIT
1123 DL CONTROL SIGNAL GENERATION UNIT
1124 IFFT
1125 CP ADDER
1126 RF TRANSMISSION UNIT
1127 TRANSMISSION ANTENNA
113 CONTROL UNIT
1132, 1132a RELAY UE LAYER 2 ID AND C-RNTI DETERMINER
1133 D2D RESOURCE SCHEDULER
12 UE (MUE)
121 TRANSMISSION PROCESSING UNIT (CELLULAR COMMUNICATION)
1211 CHANNEL ENCODER
1212 IFFT
1213 CP ADDER
1214 RADIO (RF) TRANSMISSION UNIT
1215 TRANSMISSION ANTENNA
122 RECEPTION PROCESSING UNIT (CELLULAR COMMUNICATION)
1220 RECEPTION ANTENNA
1221 RF RECEPTION UNIT
1222 CP REMOVER
1223 PDSCH DEMODULATION UNIT
123 TRANSMISSION PROCESSING UNIT (D2D COMMUNICATION)
1231 SA GENERATION UNIT
1232 D2D DATA GENERATION UNIT
1233 DS GENERATION UNIT
1234 RF TRANSMISSION UNIT
1235 TRANSMISSION ANTENNA
124 RECEPTION PROCESSING UNIT (D2D COMMUNICATION)
1240 RECEPTION ANTENNA
1241 RF RECEPTION UNIT
1242 D2D DS DETECTION UNIT
1243 D2D DATA DEMODULATION UNIT
1244 DS RESPONSE GENERATION UNIT
125 CONTROL UNIT
1251, 1251a RESOURCE CONFIGURATION/ TA COMMAND UNIT
1253 D2D SCHEDULER
13 RELAY UE
131 TRANSMISSION PROCESSING UNIT (CELLULAR COMMUNICATION)
1311 CHANNEL ENCODER
1312 UL SIGNAL GENERATION UNIT
1313 IFFT
1314 CP ADDER
1315 RF TRANSMISSION UNIT
1316 TRANSMISSION ANTENNA
132 RECEPTION PROCESSING UNIT (CELLULAR COMMUNICATION)
1320 RECEPTION ANTENNA
1321 RF RECEPTION UNIT
1322 CP REMOVER
1323 PDSCH DEMODULATION UNIT
133 TRANSMISSION PROCESSING UNIT (D2D COMMUNICATION)
1331 SA GENERATION UNIT
1332 D2D DATA GENERATION UNIT
1333 DS GENERATION UNIT
1334 RF TRANSMISSION UNIT
1335 TRANSMISSION ANTENNA
134 RECEPTION PROCESSING UNIT (D2D COMMUNICATION)
1340 RECEPTION ANTENNA
1341 RF RECEPTION UNIT
1342 D2D DS DETECTION UNIT
1343 D2D DATA DEMODULATION UNIT
1344 DS RESPONSE DETECTION UNIT
135 CONTROL UNIT
1351 RESOURCE CONFIGURATION/ TA COMMAND UNIT
1352 TA ESTIMATION UNIT
1353 D2D SCHEDULER

### CITATION LIST

### Patent Literature

PTL 1: International Publication Pamphlet No. WO 2014/087719
PTL 2: International Publication Pamphlet No. WO 2015/029953
PTL3: US2014/204835A1

### Non Patent Literature

NPL 1: [3GPP TS 36.211 V13.0.0 (2015-12), 3rd Generation Partnership Project; Technical Specification Group Radio Access Network; Evolved Universal Terrestrial Radio Access (E-UTRA); Physical channels and modulation (Release 13)]
NPL2: LG ELECTRONICS INC, "Further Consideration on Timing Alignment", 3GPP DRAFT; R1-100229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20100112), vol. RAN WG1, no. Valencia, Spain; 20100118

## Claims

1. A wireless communication system (1) comprising:
a base station (11);
a relay node (13); and
a wireless equipment (12) configured to receive a downlink signal from the base station without the relay node being involved and to transmit an uplink signal to the base station via the relay node;
wherein the relay node is configured to transmit a discovery signal to the wireless equipment, in response to which the wireless equipment is configured to transmit a response signal that includes an identifier of the wireless equipment,
wherein the base station is configured to control a timing at which the wireless equipment transmits the uplink signal, through communication over the downlink signal, using information relating to first timing advance between the base station and the relay node and information relating to second timing advance between the wireless equipment and the relay node, and
wherein the relay node is configured to:
receive the response signal to the transmitted discovery signal from the wireless equipment and thus to estimate information relating to the second timing advance between the wireless equipment and the relay node,and
transmit the identifier, the information relating to the first timing advance, and the information relating to the second timing advance to the base station.

2. The wireless communication system according to claim 1, wherein
the wireless equipment is configured to perform the transmission of the discovery signal when receiving a paging signal from the base station.

3. The wireless communication system according to claim 1 or 2, wherein
the relay node is configured to perform the transmission to the base station on a random access channel for the base station.

4. The wireless communication system according to claim 1 or 2, wherein
the relay node is configured to perform the transmission to the base station, with a radio resource control (RRC) connection re-establishment request to the base station.

5. The wireless communication system according to claim 1 or 2, wherein
the relay node is configured to perform the transmission to the base station, on a control channel or a data channel for uplink that is completely established between the relay node and the base station.

6. A relay node (13) for relaying uplink communication between a wireless equipment (12) and a base station (11), the relay node comprising:
a communication unit (131) configured to relay an uplink signal, that is transmitted by the wireless equipment which receives a downlink signal from the base station, to the base station;
a transmission unit (133) configured to transmit a discovery signal to the wireless equipment, and to transmit information relating to a first timing advance between the base station and the relay node to the base station;
a reception unit (132, 134) configured to receive a response signal to the discovery signal transmitted by the wireless equipment, the response signal including an identifier of the wireless equipment; and
a control unit (135) configured to estimate information relating to a second timing advance between the wireless equipment and the relay node;
wherein the transmission unit is further configured to transmit the identifier and the information relating to the second timing advance to the base station.

7. A base station (11) for transmitting a downlink signal to a wireless equipment (12), the base station comprising:
a reception unit (111) configured to receive, from a relay node (13) that relays an uplink signal which is transmitted by the wireless equipment, information relating to a first timing advance between the relay node and the base station, information relating to a second timing advance between the wireless equipment and the relay node that is estimated by the relay node, and an identifier of the wireless equipment; and
a control unit (113) configured to control a timing at which the wireless equipment transmits the uplink signal, with the downlink signal to the wireless equipment, using the information relating to the first timing advance and the second timing advance.

## Patentansprüche

1. Drahtloses Kommunikationssystem (1), das Folgendes umfasst:
eine Basisstation (11);
einen Relaisknoten (13) und
eine drahtlose Ausrüstung (12), die dazu ausgelegt ist, ein Downlinksignal von der Basisstation zu empfangen, ohne dass der Relaisknoten beteiligt ist, und ein Uplinksignal via den Relaisknoten zur Basisstation zu übertragen;
wobei der Relaisknoten dazu ausgelegt ist, ein Entdeckungssignal zur drahtlosen Ausrüstung zu übertragen, in Reaktion worauf die drahtlose Ausrüstung dazu ausgelegt ist, ein Antwortsignal zu übertragen, das eine Kennung der drahtlosen Ausrüstung beinhaltet,
wobei die Basisstation dazu ausgelegt ist, eine Zeit zu steuern, zu der die drahtlose Ausrüstung mittels Kommunikation über das Downlinksignal unter Verwendung von Informationen, die einen ersten Zeitvorlauf zwischen der Basisstation und dem Relaisknoten betreffen, und Informationen, die einen zweiten Zeitvorlauf zwischen der drahtlosen Ausrüstung und dem Relaisknoten treffen, das Uplinksignal überträgt, und
wobei der Relaisknoten zu Folgendem ausgelegt ist:
Empfangen des Antwortsignals auf das übertragene Entdeckungssignal von der drahtlosen Ausrüstung und somit Schätzen von Informationen, die den zweiten Zeitvorlauf zwischen der drahtlosen Ausrüstung und dem Relaisknoten betreffen, und
Übertragen der Kennung, der Informationen, die den ersten Zeitvorlauf betreffen, und der Informationen, die den zweiten Zeitvorlauf betreffen, zur Basisstation.

2. Drahtloses Kommunikationssystem nach Anspruch 1, wobei
die drahtlose Ausrüstung dazu ausgelegt ist, die Übertragung des Entdeckungssignals durchzuführen, wenn sie ein Pagingsignal von der Basisstation empfängt.

3. Drahtloses Kommunikationssystem nach Anspruch 1 oder 2, wobei
der Relaisknoten dazu ausgelegt ist, die Übertragung zur Basisstation auf einem Direktzugriffskanal für die Basisstation durchzuführen.

4. Drahtloses Kommunikationssystem nach Anspruch 1 oder 2, wobei
der Relaisknoten dazu ausgelegt ist, die Übertragung zur Basisstation mit einer Funkressourcensteuerungs(RRC)-Verbindungsneuaufbauanforderung an die Basisstation durchzuführen.

5. Drahtloses Kommunikationssystem nach Anspruch 1 oder 2, wobei
der Relaisknoten dazu ausgelegt ist, die Übertragung zur Basisstation auf einem Steuerkanal oder einem Datenkanal für Uplink, der zwischen dem Relaisknoten und der Basisstation vollständig aufgebaut ist, durchzuführen.

6. Relaisknoten (13) zum Weiterleiten einer Uplinkkommunikation zwischen einer drahtlosen Ausrüstung (12) und einer Basisstation (11), wobei der Relaisknoten Folgendes umfasst:
eine Kommunikationseinheit (131), die dazu ausgelegt ist, ein Uplinksignal, das von der drahtlosen Ausrüstung übertragen wird, die ein Downlinksignal von der Basisstation empfängt, an die Basisstation weiterzuleiten;
eine Übertragungseinheit (133), die dazu ausgelegt ist, ein Entdeckungssignal zur drahtlosen Ausrüstung zu übertragen und Informationen, die einen ersten Zeitvorlauf zwischen der Basisstation und dem Relaisknoten betreffen, zur Basisstation zu übertragen;
eine Empfangseinheit (132, 134), die dazu ausgelegt ist, ein Antwortsignal auf das Entdeckungssignal, das von der drahtlosen Ausrüstung übertragen wurde, zu empfangen, wobei das Antwortsignal eine Kennung der drahtlosen Ausrüstung beinhaltet; und
eine Steuereinheit (135), die dazu ausgelegt ist, Informationen, die einen zweiten Zeitvorlauf zwischen der drahtlosen Ausrüstung und dem Relaisknoten betreffen, zu schätzen;
wobei die Übertragungseinheit ferner dazu ausgelegt ist, die Kennung und die Informationen, die den zweiten Zeitvorlauf betreffen, zur Basisstation zu übertragen.

7. Basisstation (11) zum Übertragen eines Downlinksignals zu einer drahtlosen Ausrüstung (12), wobei die Basisstation Folgendes umfasst:
eine Empfangseinheit (111), die dazu ausgelegt ist, von einem Relaisknoten (13), der ein Uplinksignal weiterleitet, das von der drahtlosen Ausrüstung übertragen wird, Informationen, die einen ersten Zeitvorlauf zwischen dem Relaisknoten und der Basisstation betreffen, Informationen, die einen zweiten Zeitvorlauf zwischen der drahtlosen Ausrüstung und dem Relaisknoten betreffen, der vom zweiten Relaisknoten geschätzt wird, und eine Kennung der drahtlosen Ausrüstung zu empfangen; und
eine Steuereinheit (113), die dazu ausgelegt ist, eine Zeit, zu der die drahtlose Ausrüstung das Uplinksignal mit dem Downlinksignal zur drahtlosen Ausrüstung überträgt, unter Verwendung von Informationen, die den ersten Zeitvorlauf und den zweiten Zeitvorlauf betreffen, zu steuern.

## Revendications

1. Système de communication sans fil (1) comprenant :
une station de base (11) ;
un nœud de relais (13) ; et
un équipement sans fil (12) configuré pour recevoir un signal de liaison descendante depuis la station de base sans implication du nœud de relais et pour transmettre un signal de liaison montante à la station de base via le nœud de relais ;
dans lequel le nœud de relais est configuré pour transmettre un signal de découverte à l'équipement sans fil, en réponse auquel l'équipement sans fil est configuré pour transmettre un signal de réponse qui comprend un identifiant de l'équipement sans fil,
dans lequel la station de base est configurée pour commander une synchronisation à laquelle l'équipement sans fil transmet le signal de liaison montante, par une communication sur le signal de liaison descendante, en utilisant des informations relatives à la première avance de synchronisation entre la station de base et le nœud de relais et des informations relatives à la seconde avance de synchronisation entre l'équipement sans fil et le nœud de relais, et
dans lequel le nœud de relais est configuré pour :
recevoir le signal de réponse au signal de découverte transmis depuis l'équipement sans fil et ainsi estimer des informations relatives à la seconde avance de synchronisation entre l'équipement sans fil et le nœud de relais, et
transmettre l'identifiant, les informations relatives à la première avance de synchronisation et les informations relatives à la seconde avance de synchronisation à la station de base.

2. Système de communication sans fil selon la revendication 1, dans lequel
l'équipement sans fil est configuré pour effectuer la transmission du signal de découverte lors de la réception d'un signal de radiomessagerie à partir de la station de base.

3. Système de communication sans fil selon la revendication 1 ou 2, dans lequel
le nœud de relais est configuré pour effectuer la transmission à la station de base sur un canal à accès aléatoire pour la station de base.

4. Système de communication sans fil selon la revendication 1 ou 2, dans lequel
le nœud de relais est configuré pour effectuer la transmission vers la station de base, avec une demande de rétablissement de connexion de commande de ressources radio (RRC) à la station de base.

5. Système de communication sans fil selon la revendication 1 ou 2, dans lequel
le nœud de relais est configuré pour effectuer la transmission vers la station de base, sur un canal de commande ou un canal de données pour liaison montante qui est complètement établi entre le nœud de relais et la station de base.

6. Nœud de relais (13) pour relayer une communication de liaison montante entre un équipement sans fil (12) et une station de base (11), le nœud de relais comprenant :
une unité de communication (131) configurée pour relayer un signal de liaison montante, qui est transmis par l'équipement sans fil qui reçoit un signal de liaison descendante depuis la station de base, à la station de base ;
une unité de transmission (133) configurée pour transmettre un signal de découverte à l'équipement sans fil, et pour transmettre des informations relatives à une première avance de synchronisation entre la station de base et le nœud de relais à la station de base ;
une unité de réception (132, 134) configurée pour recevoir un signal de réponse au signal de découverte transmis par l'équipement sans fil, le signal de réponse comprenant un identifiant de l'équipement sans fil ; et
une unité de commande (135) configurée pour estimer des informations relatives à une seconde avance de synchronisation entre l'équipement sans fil et le nœud de relais ;
dans lequel l'unité de transmission est en outre configurée pour transmettre l'identifiant et les informations relatives à la seconde avance de synchronisation à la station de base.

7. Station de base (11) pour transmettre un signal de liaison descendante à un équipement sans fil (12), la station de base comprenant :
une unité de réception (111) configurée pour recevoir, en provenance d'un nœud de relais (13) relayant un signal de liaison montante qui est transmis par l'équipement sans fil, des informations relatives à une première avance de synchronisation entre le nœud de relais et la station de base, des informations relatives à une seconde avance de synchronisation entre l'équipement sans fil et le nœud de relais qui est estimée par le nœud de relais et un identifiant de l'équipement sans fil ; et
une unité de commande (113) configurée pour commander une synchronisation à laquelle l'équipement sans fil transmet le signal de liaison montante, avec le signal de liaison descendante, à l'équipement sans fil, en utilisant les informations relatives à la première avance de synchronisation et à la seconde avance de synchronisation.
